# EUROPEAN PATENT SPECIFICATION

(11) **EP 1 557 626 B1**
(45) Date of publication and mention of the grant of the patent: **23.07.2008**
(21) Application number: 04075144.8
(22) Date of filing: 23.01.2004
(51) Int. Cl.: F27B 9/40, C04B 33/32, C04B 35/64

(54) **Method for manufacturing ceramic elements and ceramic kiln plant equipped for applying such a method**
Verfahren zur Herstellung keramischer Elemente und Brennofenanlage zur Durchführung des Verfahrens
Procédé de fabrication d'éléments céramiques et four de cuisson pour la mise en oeuvre du procédé

(43) Date of publication of application: 27.07.2005
(73) Proprietor: Wienerberger Bricks N.V., 8500 Kortrijk (BE)
(72) Inventor: Van den Biggelaar, Jan, 6225 JS Maastricht (NL); Vandermaelen, Dirk, 9660 Brakel (BE); Rener, Marcel, 62980 Vermelles (FR)
(74) Representative: Ostyn, Frans

(56) References cited:
- GB-A- 1 518 925
- US-A- 4 278 631
- US-A- 4 569 658

## Description

On the one hand, the invention relates to a method for manufacturing ceramic elements, the ceramic elements being preformed and dried, and subsequently being sintered in a tunnel kiln, degassing products produced during the burning process being removed from the tunnel kiln by means of a removal system. On the other hand, the invention relates to a tunnel kiln equipped for applying such a method.

By ceramic elements are meant both coarse ceramic construction elements such as bricks or building bricks, bricks for inside walls and tiles, and fine ceramic elements for general use and ceramic paving tiles and wall tiles.

In general ceramic construction elements are applied for constructive and aesthetic purposes for housebuilding and public utilities, and especially to be used to embellish the outer layers of such constructions.

In the process known and generally used for manufacturing ceramic elements, i.e. sintering at high temperatures of clay minerals contained in the ceramic construction elements to obtain an irreversible mechanical structure, a mineral transformation is realized or not during heating to various temperatures, and depending on the composition of the raw material, which, among other things, is causing various degassing products. These degassing products, likewise called flue gases, are often harmful to men and environment and are usually removed by means of a removal system, for instance a chimney, with which the kiln plant is usually equipped. Today, these emissions are subjected to statutory rules and regulations.
A well-known phenomenon with ceramic construction elements, for instance, bricks which are laid or glued, is that when they get in touch with our environment, so when they have to endure the effects of acid rainwater and wind, which will cause a fogging on the surface of the ceramic construction elements that will spoil the aesthetic aspect for which they were meant. This fogging is essentially caused by an efflorescence of water-soluble salts. It should be noted that difference must be made between a fogging caused by the influence of the composition of the ceramic construction element, and a fogging caused by the effects of mortar and environment. Such foggings are difficult to remove and are causing many discussions when claims for damages have to be settled. The total expenses due to claims, for damages because of usually white or grey foggings on outside walls of buildings for instance, amount to several millions of Euro per annum and per country.

These foggings are caused by migration of soluble salts to the surface of the bricks. Migration of salts is determined by the nature of the pore system, the quantity of soluble salts contained in the ceramic construction element, the degree of lixiviation and the acidity of the lixiviating or percolating liquid (rainwater). Here also a distinction should be made, because the source of the minerals to be finally lixiviated may have several causes. The difference is essentially to be found in the presence of calcium carbonate (CaCO₃) which is a natural substance of clay, or may have been added to the raw material as an additive in order to obtain the specific ceramic properties. A ceramic structure made up of minerals containing calcium, will combine this calcium as calcium silicates and/or calcium-aluminium silicates. Not all those silicates are acid resisting, so that, depending on the acidity , the percolation frequency and time, a lixiviation mechanism will occur, causing fogging by essentially calcium (hydrate) carbonate, calcium silicate and their mixtures and variants. In case a raw material originally contains sulphurous components, for instance, traces of sulphate salts, then also calcium sulphate (CaSO₄) and its derivatives will be found in the fogging.

In addition to the possible presence of several forms of sulphur (S) in the sorts of clay available, the usual sorts of clay, by nature, also contain components which will finally emit hydrogen chloride (HCl) and hydrogen fluoride. Because of the internal circuit, such gases can be harmful to the ceramic elements. The internal circuit of gases means, that when a gas is emitted from a ceramic element at a certain temperature in the ceramic kiln plant, this gas may be again absorbed by the ceramic element. This process depends on the composition of the composition of the mass of the ceramic element. It is therefore possible that the presence of, for instance, HF will produce harmful effects on the ceramic elements it the mass contains CaCO₃. At a certain temperature in the ceramic kiln plant (essentially between 800 and 900°C) this salt is split up into CaO and CO₂. The CaO reacts with HF, which is also found in the kiln plant, to form CaF₂, which is no longer removed from the ceramic element. Ceramic elements, the mass of which contains a higher percentage of CaCO₃, usually are of a yellowish colour. Because CaF₂ is formed, brown stains will develop on the surface of the ceramic element, having the disadvantage that the ceramic element will no longer meet the aesthetic requirements.

The underlying mechanism of the degree of emission through the chimney and the interaction with the degree of efflorescence on the ceramic construction element, may be simply translated into a mass balance of the components concerned. Therefore the mass balance may be expressed as being: that which cannot be removed from the ceramic element by heating, will be found back later on in the ceramic construction element as a possible precursor of the efflorescence mechanism or as being the reason for any harmful aesthetic or technical defect.

On the one hand, the purpose of the invention is to provide a method for manufacturing ceramic elements by which efflorescence and other harmful consequences can be prevented. On the other hand, the purpose of the invention is to provide a tunnel kiln which is equipped in order to apply the method according to the invention.

On the one hand, the purpose of the invention is attained by providing a method in which the ceramic elements are preformed and dried and are subsequently sintered in a ceramic kiln plant, degassing products produced during the burning process being removed from the kiln plant by means of a removal system and one or several peaks of one or several acid forming volatile components, which are produced in the heating up phase during the burning process, being determined, and one or several extraction points being installed in the ceramic kiln plant in order to extract mainly all acid forming volatile components from the ceramic kiln plant when said peaks will occur.

HCL, HF, SO₂, SO₃, and SOₓ (sum of SO₂ and SO₃) are rated among the acid forming volatile components .

In this manner, the salt forming degassing products are removed from the ceramic kiln plant during the ceramic burning process to a maximum extent, such that they can no longer be reabsorbed by the ceramic element to be able to serve as a precursor for the efflorescence mechanism, or can no longer be absorbed by the ceramic element in order to prevent any aesthetic or technical disadvantages for the ceramic element.

In a preferred method according to the invention the said extraction points in the ceramic kiln plant are provided right before the place where said peaks will occur.

By "right before", a place in the ceramic kiln plant is meant, between the place where the peak of an acid forming volatile component occurs and the place where the removal system is situated. By the term "right before" can also be meant a zone in which, at a certain temperature, for instance, between 850 and 900°C one great peak with several acid forming volatile components is found. This is caused by the fact that the temperature in all points of the section of the kiln has not necessarily to be homogenous.

In a preferred method according to a claim of the present invention, the extraction points are equipped such that they are capable of continuously extracting the acid forming volatile components from the tunnel kiln.

In a preferred embodiment according to the invention a extraction point consists of an exhaust system, several exhaust systems being conducted to an exhaust channel which is connected to the removal system.

The removal system can be the main chimney of the tunnel kiln or another second chimney.

The method according to the invention may be applied to all ceramic processes for coarse, fine and technical ceramic products, preferably in tunnel kiln processes.

On the other hand, the purpose of the invention is attained by providing a tunnel kiln which is equipped for applying a method according to any one of the method claims.

In a preferred tunnel kiln according to the invention the tunnel kiln comprises an exhaust system, by means of which the kiln gases up to 1300°C can be extracted from a ceramic kiln process.

In order to further clarify the characteristics of the present invention and to point out additional advantages and particulars, a more detailed description of the state-of-the-art and its corresponding disadvantages, and of the method and the tunnel kiln according to the invention to solve these disadvantages will now follow. It may be obvious that nothing in the following description may be interpreted as a restriction of the protection of the method and the device according to the invention, demanded for in the claims.

In this description, by means of reference numbers, reference is made to the attached drawings in which:
- figure 1 is a schematic representation of a ceramic kiln plant according to the state-of-the-art, and the adaptations that have been made in order to carry out a method according to the invention;
- figure 2 represents a chart of concentrations of gaseous compounds with respect to the burning temperature.

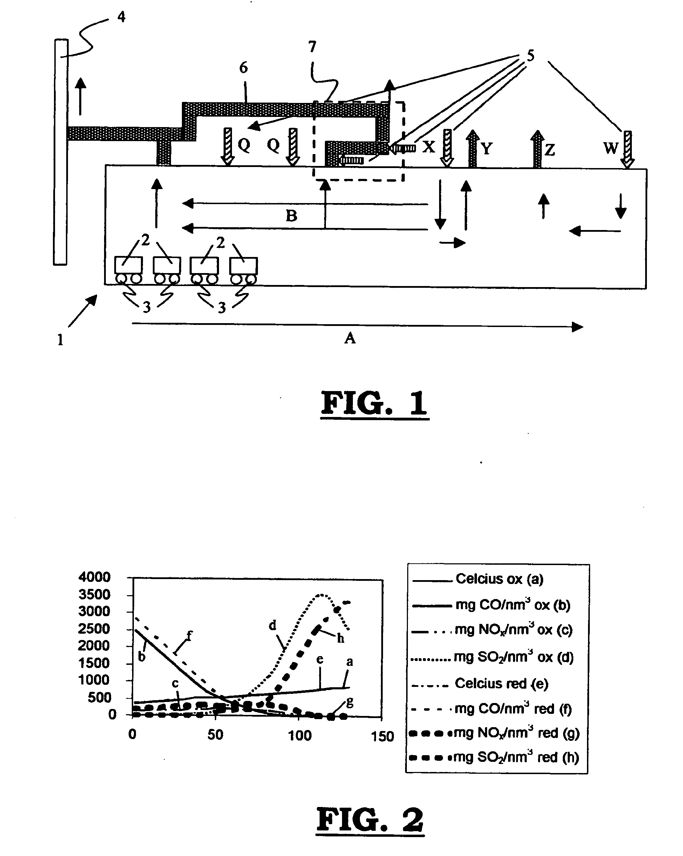

In a method for manufacturing ceramic elements (2) according to the state-of-the-art, the ceramic elements (2) are first preformed and dried. It is also possible to take dry moulding as a starting point. The modern process of manufacturing ceramic elements (2) preferably occurs in a tunnel kiln (1), as represented in figure 1. However, this method can be generally applied to counter current processes in ceramic kilns. The ceramic elements (2) are conveyed through the tunnel kiln (1) on trolleys (3) or any other appropriate means of transport. The tunnel kiln (1) may be described as a construction in which the dry ceramic elements (2) yet unburnt are slowly heated to sintering temperature in counter current with respect to the flue gases in the kiln, to be subsequently cooled down again slowly. The direction of the flow of products is indicated by the letter A, whereas the air flow in the ceramic kiln plant (1) is indicated by the letter B. The gases in the kiln essentially consist of cooling air (5) that is conducted into the ceramic kiln plant (1) opposite to the direction (A) in which the ceramic elements (2) are conveyed. In the front of the ceramic kiln plant (1), cooling air may be introduced or not (see arrows Q). The intention of this arrangement is that, when a solid fossil fuel is used such as, for instance, terryl, the tunnel kiln process will be provided with energy according to the principle of spontaneous combustion, this spontaneous combustion being controlled by means of this cooling air. This cooling air is conducted to the chimney. The cooling air which is introduced into the central part of the temperature trajectory in the ceramic kiln plant (1), is called dump cooling (see arrow X). The exhaust of this cooling air is called high temperature air removal (see arrow Y). The cooling air which is introduced at the back of the ceramic kiln plant (1) (see arrow W) is serving to cool down the sintered ceramic elements (2). This cooling air is removed again as clean cooling air (see arrow Z). This process is called low temperature removal. The cooling air indicated by the arrows Y and A may be used again as drying air for the drying room. Therefore the ceramic kiln plant (1) may be considered to be a heat exchanger of a cold ceramic element/hot flue gas on the one hand, and cooling air (5)/hot ceramic element on the other hand. The energy required is added in the sintering trajectory by means of combustion of gas or any other fossil fuel. Also solid fossil fuel may be contained in the ceramic element (2), the tunnel kiln process being supplied with energy by means of the spontaneous combustion principle. This may be the case, when the ceramic kiln plant (1) is not equipped with gas burners. During the heating up phase of the ceramic elements (2) from about 20°C to about >950°C the clay minerals or the raw materials are converted into other minerals at various temperatures, and various degassing reactions will occur depending on the composition of the raw materials. Various degassing products (flue gases) which are produced are usually removed from the ceramic kiln plant (1) through the main chimney (4).

Considered from a thermodynamic point of view, a reaction for the emission of the degassing products from the ceramic elements will have to be initiated. This initiation then occurs by adding energy, as many energy as required, to supply the energy of decomposition, the energy of evaporation or energy of sublimation. On the basis of the various energy levels and the nature of the energy liberated or required (endothermic or exothermic) a reasonably exact spectrum may be drawn up of the components which may be emitted from a raw material, and by which temperature this will occur. The exothermic reactions are to be essentially classified with the oxidation of the nonferrous elements. So this leads to combustion products such as: CO, CO₂, SO₂, SO₃, H₂O. The endothermic reaction are essentially reactions of decomposition, such as the separation of CO₂ from CaCO₃ and MgCO₃. As an example is mentioned the evaporation of water in a temperature trajectory up to 400 degrees. A ceramic material runs over a temperature trajectory in which all products mentioned above may be liberated from the raw material or are formed from the combustion gases.
However, this not the case in a situation in which the activation required - or the initiating energy for the salt(s) contained in the ceramic element (2), will be insufficient. This occurs with raw material containing acid forming volatile components and if salts are contained in the mixture yet unburnt. Usually these salts, such as sulphate salts and the fluorides, as well as the chlorides of alkaline and alkaline earth metals, have a high melting point. In the most common cases, the ceramic kiln plant (1) does not attain the temperature of decomposition required, so that the salts remain unchanged in the matrix of the burnt ceramic element (2), to be subsequently available as a precursor for the efflorescence mechanism or other harmful aesthetic or technical consequences. When formation of salt occurs during the thermal treatment in the ceramic kiln plant (1), then these salts remain available for the efflorescence. An example of this is the formation of CaSO₄, CaCl₂ and CaF₂ from the products of the decomposition of CaCO₂ and the acid forming products of decomposition. As has been already be indicated above, this is described as the internal cycle of the acid forming volatile components.

After the decomposition of compounds into SO₂, SO₃, HCl and HF, they will react spontaneously with the CaCO₃ contained in the clay. These reactions usually occur in the ceramic process during the heating-up phase of the product. The decomposed and liberated gases at various, usually high temperatures, are taken along by the air flow to the chimney (4). On the trajectory from hot to cold, these gases are reabsorbed by the CaCO₃ contained in the raw material of the ceramic element (2). The nature (specific surface) and the concentration of the CaCO₃ contained then determine to a great extent the final emission through the chimney (4) on the one hand and the availability of salts for the efflorescence on the other hand. This example essentially applies to clay rich in CaCO₃, such as may be found in nature or obtained by adding CaCO₃ to a raw material.

It has been found that during the burning process a balance between the liberated (emitted) and the absorbed gas will automatically be established. Measurements of the concentration of the acid forming gases in the ceramic kiln plant at various temperatures on the heating-up trajectory produces one or several peaks with a maximum concentration around the temperature area of the gas concerned. Concentrations of SO₂ of over 10,000 mg/nm³ were found, at a temperature of about 850°C on the heating-up trajectory. For other gases peaks have been measured, for instance, at 450°C, 850°C and 950°C. The concentration of the gaseous compounds in the ceramic kiln plant depends on the nature and the quantity of the absorbing raw materials and the nature and quantity of the gas forming compounds in the raw material as well as on the air management. A measurable load of gaseous compounds in the raw material in the chimney (4) is the result.

Measurements during burning processes of clay which is free of lime, deficient in lime and rich in lime produce a diversity of peaks, concentrations, reabsorbed quantities and emissions, depending on the acid forming gas contained. Primarily, the gaseous compounds reabsorbed are responsible for the availability in the ceramic element and therefore also for the efflorescence of salts. In general, it is found that raw materials free of lime will lead to a higher peak concentration and a higher emission and the raw material rich in lime, as it were, will clean the ceramic kiln plant and will lead to lower peak concentrations and a lower emission. As already mentioned earlier, the cycles of the degassing products are the cause of various aesthetic_phenomenona and technical deficiencies of the ceramic elements.

In case clay rich in lime is used, the extent of reabsorption of fluor may influence the surface of the bricks to such an extent that the CaF₂, known as calcspar, which is formed causes an undesirable brown decoloration of the usually yellowish surface. In case such a raw material is enriched by chloride, this will not necessarily cause any difference in colour. After the bricks, for instance, have been laid, and subsequently moistened, this does produce a decoloration, which is caused by the retention of the moisture by the hygroscopic CaCl₂. The original colour of the burnt material will only then return, when this hygroscopic moisture is removed at >100°C, which therefore has the disadvantage that a brick house front wall may show decolorations in the form of stains which will depend on the moisture gradient of that house front.

In principle, the cycle of sulphur (S) passes off in the same way, with the difference that efflorescence of sulphur is difficult to suppress. If the raw material of the ceramic element (2) already contains a soluble sulphate salt before the burning process, then this can be effectively combined to form the insoluble barium carbonate (BaCO₃). To that effect, barium carbonate is added to the raw material. During the burning process, the BaSO₄-salt is stable because of its high melting point. Without such an addition, the soluble sulphate salt might migrate outwards during the drying process, and during burning it will stick to the surface of the ceramic element (2) as a persistent fogging.
If the raw material contains an insoluble calcium phosphate (CaSO₄), then this will also remain persistent during the entire burning process, subsequently to serve as a precursor for the efflorescence mechanism. In these cases, therefore only choosing another raw material may prevent or reduce efflorescence, or the burning temperature should be set at such a high temperature, that the CaSO₄ will decompose.

In most ceramic processes it is impossible to reach this temperature because of the melting behaviour of the raw material. For some products it is worthwhile to apply a coating to the surface on which the salt will form a deposit. This coating will be burnt during the kiln process, and the salt will be easy to remove from the surface.
When the raw material contains pyrite, this pyrite will decompose at 450°C and at this temperature a high concentration (peak) is found in the ceramic kiln plant (1). The gases that were produced at 450°C, find their way to the chimney (4) almost unimpeded. However, a second peak will be produced with a higher concentration at about 850°C. The transformation into SO₂ and SO₃ at this higher temperature, is followed by a reabsorption in the lower temperature area. The newly formed salts are thermally stable and water soluble when alkaline and alkaline earth metals are concerned and may effloresce after the bricks have been laid. Adding BaCO₃ to the raw material might combine these acid residues in order to form an insoluble barium salt, but this has the disadvantage that high expenses are involved.
Ceramic kiln plants which are treating wholly or partly terryl raw material, which are slatelike materials containing carbon and pyrite, will show a clear SOₓ peak.

### Example

In figure 2 a chart is represented in which the concentrations of the various volatile components in mg/nm₃ are plotted out against the temperature of the ceramic kiln plant (Y-axis). On the X-axis, the position is indicated where the burning temperature and the peak are coinciding. Measurement was done under both reducing kiln conditions (curve Celsius red - (e)) and oxidizing kiln conditions (curve Celsius ox - (a)). At an SOₓ-peak of about 3500 mg/nm₃, an SOₓ-emission of about 110 mg/nm₃ was measured in the main chimney. A sulphur balance made up in such a process gives the following measuring results (related to the percentage of S in the raw material and the ceramic element and after having considered the losses during calcination).

**Table 1: Mass balance sulphur**

| | % s m/m |
|---|---|
| S-contents of dry substance of the element | 0.119 |
| S-contents of the burnt mass of the element | 0.085 |
| Chimney losses of S in main chimney | 0.047 |

From table 1 we may therefore deduce that most part of the original portion of sulphur remains available for the efflorescence mechanism.

The disadvantages indicated above of the present methods for manufacturing ceramic elements according to the state-of-the-art, are solved by the method according to the invention. In the methods according to the invention one or several peaks of one or several acid forming volatile components are produced during the burning process in the heating-up process are determined, and one or several extraction points (7) are installed in the ceramic kiln plant (1) in order to be able to extract the predominantly acid forming volatile components from the ceramic kiln plant (1) when said peaks occur. Preferably the said extraction points (7) in the tunnel kiln (1) are provided right before the place where said peaks occur. As already mentioned above, by "right before" is meant a place in the ceramic kiln plant between the point where the peak of an acid forming volatile component occurs and the place of the chimney. By the term "right before" may also be meant a zone where there is one great peak with various acid forming volatile components at a certain temperature, for instance, between 850 and 900°C. That is because the temperature in the section of the kiln has not necessarily to be homogenous everywhere. In this manner a maximum extraction of the acid forming volatile components from the kiln plant (1) is attained.

In figure 2 a chart is represented of concentrations of gaseous compounds with relation to the burning temperature. When the SOₓ-gas is considered, we see that curve (d) represents a peak of SOₓ under oxidising conditions, whereas curve (b) is representing a peak of SOₓ under reducing conditions. In the ceramic kiln plant (1), as represented in figure 1, an extraction point (7) is installed right before the location of the SOₓ-peak, by means of which this volatile acid forming component is extracted from the kiln (1). Preferably, this extraction point (7) consists of an exhaust device. Several exhaust devices are connected to an extraction channel (6) which is connected to the removal device (4). The removal device (4) may be the main chimney of the ceramic kiln plant (1) or another second chimney. An extraction point (7) itself may, for instance, consist of a separate chimney (not represented in the figure). In addition, the extraction point (7) may provided with a flue gas cleaner (not represented in the figure) in order to prevent that certain degassing products might end up in the environment. The degassing products may also be conducted to a second chimney. Depending on the composition of the ceramic elements (2) one or several of several harmful volatile acid forming components might be liberated and therefore be determined during the burning process in the tunnel kiln , several extraction points (7) then being applied in the ceramic kiln plant (1) in order to extract the acid forming volatile components from the ceramic kiln plant (1). If the location of the peak of acid forming volatile components should change during the burning process in the kiln, then a section with several extraction points may be provided which may be connected or disconnected as much as needed.

By providing extraction points (7) in the tunnel kiln (1) in order to extract in the main all acid forming volatile components from the kiln plant (1) when the peaks of acid forming volatile components will occur, the reabsorption of the harmful acid forming volatile components still available in the ceramic element (1) is strongly reduced.

An additional advantage is that by reducing the concentrations of aggressive kiln gases such as, for instance, HCl, HF and SOₓ in the ceramic kiln plant (1), the corrosion and attacking of the refractory material of the kiln and steel constructions in the ceramic kiln plant will be prevented.

In case that, depending on local legislation with respect to emission values, restrictions are imposed with respect to the emission values of the chimney (4), because of which cleaning of the degassing products (cleaning of flue gases) will be compulsory, the method according to the invention may contribute to cost-effective cleaning because with smaller volumes and higher concentrations the cleaning trajectory of the flue gases is engaged for the greater part of the total load.

The tunnel kiln (1) which is used to apply such a method according to the invention, and as represented in figure 1, is equipped with a so-called hot air exhaust in the predetermined position in the tunnel kiln (1) and consists of a provision, with which the ambient air will rarefy the flow of kiln gases to a lower temperature in order to protect the exhaust pipe and the exhaust fan. The "hot air" extraction device may be installed on the covering of the tunnel kiln and be equipped with an emergency device for temperature control (louver shutter) in order to protect the exhaust pipe and the fan. The choice of the extraction temperature in pipe and fan is also determined by the maximum thermal load of the kiln, the dew-point of the kiln gases (point in which gases will condensate together with H₂O) and to protect a possibly following flue gas cleaning system.

### Example of a tunnel kiln according to the invention

Atunnel kiln adapted to this method was provided with a hot air exhaust system to carry out the extraction and further consisted only of a flue gas pipe and a fan. The extraction position was chosen in that location where the prefire had a temperature trajectory of 750 to 850°C. In this position, an SOₓ-concentration of about 3500 mg SO₂, calculated back to nm₃ at 18% oxygen was measured in the tunnel kiln. The flow of the kiln gases to be extracted was set at 5000 bm₃/hour and rarefied with clean ambient air to 15000 bm₃/hour, resulting in a temperature of 150°C. The air mixture contained about 1000 mg SO₂/nm₃ at 18% oxygen. In the chimney, a concentration was measured of 110 mg SO₂/nm₃ at 18% oxygen. After a few days a balance established itself at the chimney of 50 mg SOₓ/nm₃ at 18% oxygen, and with an extraction of 800 mg SOₓ/nm₃ (8% O₂). This balance was found unchanged also after a few weeks. When measuring the efflorescence sensibility, this resulted in a decreasing efflorescence sensibility in the course of the production from a very strong to practically no efflorescence at all. The efflorescence sensibility was measured by continuously saturating the element in demineralized water, and evaporating the moisture on one side at the surface during 72 hours in a drying kiln at 30°C. Thereafter, the element was completely dried and checked on superficial salt formation.

## Claims

1. Method for manufacturing ceramic elements (2), the ceramic elements (2) being preformed and dried, and subsequently being sintered in a tunnel kiln 1), degassing products produced during the burning process being removed from the tunnel kiln (1) by means of a removal device (4), **characterized in that** one or several peaks of one or several acid forming volatile components, produced during the burning process in the heating-up process, are determined, and **in that** in a continuously operating tunnel kiln functioning according to the counter-current principle, in main all said acid forming volatile components are continuously extracted from the tunnel kiln by means of one or several extraction points (7) installed in the tunnel kiln (1).

2. Method according to claim 1, **characterized in that** said extraction points (7) in the tunnel kiln (1) are provided right before the location where said peaks occur.

3. Method according to claim 1 or 2, **characterized in that** an extraction point (7) consists of an exhaust device, several exhaust devices being conducted to an extraction channel (6) which is connected to the removal device (4).

4. Method according to claim 3, **characterized in that** the removal device (4) is the main chimney of the tunnel kiln (1) or another second chimney.

5. Method according to any one of the claims 1 up to and including 4, **characterized in that** if the location of the peak of the acid forming volatile components changes in the time during the kiln process, a section with several exhaust devices is provided which may be connected and disconnected.

6. Method according to any one of the preceding claims, **characterized in that** the method is applied to all ceramic tunnel kiln processes for coarse, fine and technical ceramics.

7. Tunnel kiln for manufacturing ceramic elements (2), which are first preformed and dried and subsequently sintered in the tunnel kiln (1), the tunnel kiln (1) being provided with a removal device (4) for removing degassing products produced during the burning process from the tunnel kiln, **characterized in that** the tunnel kiln operates continuously and functions according to the counter-current principle, and that one or several extraction points are installed in order to continuously extract in main all acid forming volatile components from the tunnel kiln (1) when one or several pre-determined peaks of one or several acid forming volatile components are produced during the burning process in the heating-up process.

8. Tunnel kiln according to claim 7, **characterized in that** the extraction points (7) are provided for extracting kiln gases up to 1300°C from the tunnel kiln process.

## Patentansprüche

1. Verfahren zur Herstellung keramischer Elemente (2), wobei die keramischen Elemente (2) vorgeformt und getrocknet und anschließend in einem Tunnelofen (1) gesintert und Entgasungsprodukte, die während des Brennprozesses entstehen, von dem Tunnelofen (1) mittels einer Abführungsvorrichtung (4) abgeführt werden, **dadurch gekennzeichnet, dass** ein oder mehrere Peaks eines oder mehrerer säurebildender flüchtiger Bestandteile, die während des Brennprozesses im Aufheizprozess entstehen, bestimmt werden, und dass bei einem kontinuierlich arbeitenden Tunnelofen, der nach dem Gegenstromprinzip funktioniert, dem Tunnelofen im Wesentlichen alle besagten säurebildenden flüchtigen Bestandteile mittels eines oder mehrerer Entnahmestellen (7), die in dem Tunnelofen (1) installiert sind, kontinuierlich entnommen werden.

2. Verfahren nach Anspruch 1, **dadurch gekennzeichnet, dass** die Entnahmestellen (7) in dem Tunnelofen (1) genau vor der Stelle vorgesehen sind, an welcher die Peaks auftreten.

3. Verfahren nach Anspruch 1 oder 2, **dadurch gekennzeichnet, dass** eine Entnahmestelle (7) aus einer Abzugsvorrichtung besteht, wobei mehrere Abzugsvorrichtungen zu einem Entnahmekanal (6) geführt werden, der mit der Abführungsvorrichtung (4) verbunden ist.

4. Verfahren nach Anspruch 3, **dadurch gekennzeichnet, dass** es sich bei der Abführungsvorrichtung (4) um den Hauptkamin des Tunnelofens (1) oder um einen anderen, zweiten Kamin handelt.

5. Verfahren nach einem der Ansprüche 1 bis 4, **dadurch gekennzeichnet, dass** wenn sich die Lage des Peaks der säurebildenden flüchtigen Bestandteile während des Brennprozesses ändert, ein Bereich mit mehreren Abführungsvorrichtungen vorgesehen wird, der angeschlossen und abgekoppelt werden kann.

6. Verfahren nach einem der vorangehenden Ansprüche, **dadurch gekennzeichnet, dass** das Verfahren in allen Keramik-Tunnelofenprozessen für Grobkeramik, Feinkeramik und technische Keramik angewendet wird.

7. Tunnelofen für die Herstellung keramischer Elemente (2), die zunächst vorgeformt und getrocknet und anschließend in dem Tunnelofen (1) gesintert werden, wobei der Tunnelofen (1) mit einer Abführungsvorrichtung (4) zum Abführen von Entgasungsprodukten, die während des Brennprozesses entstehen, aus dem Tunnelofen ausgestattet ist, **dadurch gekennzeichnet, dass** der Tunnelofen kontinuierlich arbeitet und nach dem Gegenstromprinzip funktioniert, und dass ein oder mehrere Entnahmestellen (7) installiert sind, um dem Tunnelofen (1) im Wesentlichen alle säurebildenden flüchtigen Bestandteile kontinuierlich zu entnehmen, wenn ein oder mehrere vorbestimmte Peaks eines oder mehrerer säurebildender flüchtiger Bestandteile während des Brennprozesses im Aufheizprozess erzeugt werden.

8. Tunnelofen nach Anspruch 7, **dadurch gekennzeichnet, dass** die Entnahmestellen (7) dazu vorgesehen sind, Ofengase bis zu 1300 °C aus dem Tunnelofenprozess zu entfernen.

## Revendications

1. Procédé de fabrication d'éléments céramiques (2), les éléments céramiques (2) étant préformés et séchés et ensuite frittés dans un four tunnel (1), des produits de dégazage produits pendant le procédé de cuisson étant évacués hors du four tunnel (1) au moyen d'un dispositif de décharge (4), **caractérisé en ce qu'**un ou plusieurs pic(s) d'un ou de plusieurs composant(s) volatil(s) formant de l'acide, qui est (sont) produit(s) pendant l'opération de cuisson qui est exécutée au cours du procédé de chauffage, est (sont) déterminé(s), et **en ce que** dans un four tunnel fonctionnant en continu selon le principe de contre-courant, principalement la totalité desdits composants volatils formant de l'acide sont extraits de façon continue du four tunnel au moyen d'un ou de plusieurs point(s) d'extraction (7) installé(s) dans le four tunnel (1).

2. Procédé selon la revendication 1, **caractérisé en ce que** lesdits points d'extraction (7) dans le four tunnel (1) sont formés juste avant la position à laquelle lesdits pics se produisent.

3. Procédé selon la revendication 1 ou 2, **caractérisé en ce qu'**un point d'extraction (7) est constitué par un dispositif d'échappement, plusieurs dispositifs d'échappement étant conduits jusqu'à un canal d'extraction (6) qui est connecté au dispositif de décharge (4).

4. Procédé selon la revendication 3, **caractérisé en ce que** le dispositif de décharge (4) est la cheminée principale du four tunnel (1), ou une autre deuxième cheminée.

5. Procédé selon l'une quelconque des revendications 1 à 4 incluse, **caractérisé en ce que**, si la position du pic des composants volatils formant de l'acide change pendant la période de traitement au four, une section comportant plusieurs dispositifs d'échappement est prévue et peut être connectée et déconnectée.

6. Procédé selon l'une quelconque des revendications précédentes, **caractérisé en ce que** le procédé est appliqué à tous les procédés de fabrication d'éléments céramiques en four tunnel à la fois pour des céramiques grossières, des céramiques fines et des céramiques techniques.

7. Four tunnel pour fabriquer des éléments céramiques (2) qui sont d'abord préformés et séchés et ensuite frittés dans le four tunnel (1), le four tunnel (1) comprenant un dispositif de décharge (4) pour évacuer hors du four tunnel les produits de dégazage produits pendant le procédé de cuisson, **caractérisé en ce que** le four tunnel fonctionne en continu et fonctionne selon le principe de contre-courant, et **en ce que** un ou plusieurs point(s) d'extraction est (sont) installé(s) dans le but d'extraire de façon continue hors du four tunnel (1) principalement la totalité des composants volatils formant de l'acide lorsqu'un ou plusieurs pic(s) prédéterminé(s) d'un ou de plusieurs composant(s) volatil(s) formant de l'acide est (sont) produit(s) pendant l'opération de cuisson qui est exécutée au cours du procédé de chauffage.

8. Four tunnel selon la revendication 7, **caractérisé en ce que** les points d'extraction (7) sont conçus pour extraire les gaz du four jusqu'à une température de 1300°C pendant le traitement au four tunnel.
